# EUROPÄISCHE PATENTSCHRIFT

(11) **EP 2 623 251 B1**
(45) Veröffentlichungstag und Bekanntmachung des Hinweises auf die Patenterteilung: **20.08.2014**
(21) Anmeldenummer: 12153672.6
(22) Anmeldetag: 02.02.2012
(51) Int. Cl.: B23K 26/22, B23K 26/30, B23K 26/08, B23K 26/14

(54) **Maschine und Verfahren zur Materialbearbeitung von Werkstücken mit einem Laserstrahl mit Aktivierung der Strahlquelle, wenn zwei Stromkreise geschlossen sind**
Machine for and method of material processing of workpieces with a laser beam with activation of the beam source wenn two electric circuit are closed
Machine et procédé de traitement de matériau de pièces usinées à l'aide d'un rayon laser avec activation de la source lumineuse quand deux circuits électriques sont fermés

(43) Veröffentlichungstag der Anmeldung: 07.08.2013
(73) Patentinhaber: IPG Photonics Corporation, Oxford, Massachusetts 01540 (US)
(72) Erfinder: Schramm, Ingo, 57587 Birken-Honigsessen (DE); Fuchs, Artjom, 57258 Freudenberg (DE); Stobbe, Sergei, 57539 Bruchertseifen (DE); Siewert, Andreas, 44581 Castrop-Rauxel (DE); Barz, Manfred, 56170 Bendorf (DE); Thieme, Jörg, 90518 Altdorf (DE)
(74) Vertreter: Kohlmann, Kai

(56) Entgegenhaltungen:
- EP-A1- 0 936 021
- EP-A1- 2 149 421
- US-A- 4 237 364
- US-A1- 2003 213 786
- US-A1- 2008 302 766

## Beschreibung

Die Erfindung betrifft eine Maschine zur Materialbearbeitung von einem elektrisch leitfähigen Werkstück oder mehreren sich berührenden, elektrisch leitfähigen Werkstücken mit einem Oberwerkzeug umfassend ein Schutzgehäuse mit einem oberen Druckstück, wobei das obere Druckstück eine Austrittsöffnung für einen von einer Strahlquelle erzeugten Laserstrahl aufweist und einem relativ zum Oberwerkzeug bewegbaren Unterwerkzeug mit einem unteren Druckstück sowie einer Energieversorgung für die Strahlquelle. Außerdem betrifft die Erfindung ein Verfahren zur Materialbearbeitung eines Werkstücks mit einem Laserstrahl mit einer derartigen Maschine.

Moderne Hochleistungslaser werden in der industriellen Fertigung zur Materialbearbeitung eingesetzt. Insbesondere gewinnt das Laserstrahlschweißen zunehmend an Bedeutung. Laserstrahlschweißen wird vor allem zum Verschweißen von Werkstücken eingesetzt, die mit hoher Schweißgeschwindigkeit, mit schmaler Schweißnaht und mit geringem thermischem Verzug gefügt werden müssen. Das Laserstrahlschweißen wird in der Regel ohne Zuführung eines Zusatzwerkstoffes ausgeführt. Um die Laserstrahlung flexibel zu dem Werkstück zu führen, weist eine Anordnung zum Laserstrahlschweißen üblicherweise eine Strahlquelle und ein Strahlführungssystem auf. Das Strahlführungssystem umfasst insbesondere einen flexiblen Lichtwellenleiter (LWL), mit dem die Laserstrahlung von der Strahlquelle zu dem Bearbeitungskopf mit einer Austrittsöffnung für den Laserstrahl geführt wird. Der Bearbeitungskopf ist insbesondere an einem mehrachsig beweglichen Arm eines Industrieroboters angeordnet. Die Strahlquelle, beispielsweise ein Festkörperlaser, ist indes vorzugsweise stationär angeordnet.

Von Lasereinrichtungen gehen nicht unerhebliche Gesundheitsgefahren aus. Die konzentrierte elektromagnetische Strahlung kann biologische Schäden bei den Anwendern der Lasereinrichtung hervorrufen. Treffen Laserstrahlen oder deren Streustrahlung auf die Haut bzw. Hornhaut auf, kommt es je nach Wellenlänge der Strahlung zu Verbrennungen und/oder Gewebeschädigungen. Aufgrund dieses Gefährdungspotentials gelten für Lasereinrichtungen strenge Unfallverhütungsvorschriften. Im Sinne dieser Unfallverhütungsvorschriften werden Lasereinrichtungen in unterschiedliche Klassen eingeordnet. Für Maschinen zum Laserstrahlschweißen, die für die Automobilproduktion bestimmt sind, wird das geringste Gefährdungspotential verlangt, wonach die zugängliche Laserstrahlung der Lasereinrichtung ungefährlich sein muss (Klasse 1). Unter einem Schutzgehäuse werden im Sinne dieser Unfallverhütungsvorschriften diejenigen Teile der Lasereinrichtung verstanden, die dafür vorgesehen sind, zugängliche Strahlung zu verhindern, die die vorgeschriebenen Grenzwerte der zugänglichen Strahlung übersteigt.

Um bei Maschinen zum Laserstrahlschweißen eine Gesundheitsgefährdung zu vermeiden, ist es aus dem Stand der Technik bekannt, die gesamte Maschine mit Schutzwänden, meist aus Metall, einzuhausen. Durch diese Einhausung wird den Unfallverhütungsvorschriften Rechnung getragen. Die vollständige Einhausung der Maschine behindert jedoch deren Integration in den kontinuierlichen Produktionsprozess in der Automobilindustrie.

Aus der DE 20 2007 012 255 U1 ist beispielsweise eine vollständige Einhausung einer Maschine zur Materialbearbeitung eines Werkstücks mit einem Laserstrahl bekannt, wobei die Einhausung doppelwandig ausgeführt ist. Eine Sender-Empfänger-Einheit überwacht den Hohlraum zwischen den Wandungen der Einhausung. Sobald in diesen Hohlraum Laserstrahlung eintritt, sprechen die Empfangselemente an und lösen einen Sicherheitskreis der Lasereinrichtung aus.

Die EP 2 149 421 A1 offenbart eine Maschine zum Laserstrahlschweißen in einem kontinuierlichen Produktionsprozess in der Automobilindustrie gemäß dem Oberbegriff des Anspruchs 1, bei der eine Strahlquelle über einen Lichtwellenleiter mit einer Fokussieroptik verbunden ist, wobei die Optik in einem maschinengeführten Schutzgehäuse des Oberwerkzeugs angeordnet ist. Das Schutzgehäuse umfasst ein oberes Druckstück mit einer Austrittsöffnung für den Laserstrahl. Die zu verschweißenden Werkstücke werden zwischen dem Oberwerkzeug und einem relativ dazu beweglichen Unterwerkzeug eingeklemmt. Der bei der Verschweißung auf mindestens ein Werkstück gerichtete Laserstrahl wird von der Fokussieroptik so ausgerichtet, dass der Laserstrahl ausschließlich durch die schlitzförmige Austrittsöffnung hindurch aus dem Schutzgehäuse austritt. Um die Personensicherheit zu verbessern, ist die Strahlquelle erst dann aktivierbar, wenn die Austrittsöffnung des Schutzgehäuses auf einem Werkstück aufsitzt. Die Aktivierung wird insbesondere durch ein Schaltelement bewirkt, das beim Aufsitzen des Austrittschlitzes die Energieversorgung der Strahlquelle aktiviert. Diese Maschine zum Laserstrahlschweißen lässt sich in die Infrastruktur herkömmlicher Widerstandsschweißlinien der Automobilindustrie integrieren.

Trotz der in der EP 2 149 421 A1 vorgeschlagenen Maßnahmen zur Verbesserung der Personensicherheit wird die von den Unfallverhütungsvorschriften für Lasereinrichtungen geforderte Klasse 1 nicht unter allen Betriebsbedingungen erreicht.

Ausgehend von diesem Stand der Technik liegt der Erfindung die Aufgabe zu Grunde, eine Maschine zur Materialbearbeitung von Werkstücken der eingangs erwähnten Art, insbesondere eine Maschine zum Laserstrahlschweißen zu schaffen, die ohne vollständige Einhausung der Maschine eine verbesserte Personensicherheit gewährleistet. Des Weiteren soll ein Verfahren und eine Anordnung zur Verbesserung der Personensicherheit beim Betrieb einer derartigen Maschine angegeben werden.

Diese Aufgabe wird bei einer Maschine zur Materialbearbeitung von Werkstücken der eingangs erwähnten Art durch
- eine galvanische Trennung zwischen den Druckstücken aus elektrisch leitendem Material,
- mindestens einen ersten elektrischen Stromkreis umfassend einen mechanisch betätigten Schalter, der derart an dem oberen Druckstück angeordnet ist, dass er schließt, wenn das obere Druckstück das Werkstück bzw. eines der Werkstücke berührt,
- mindestens einen zweiten elektrischen Stromkreis umfassend das obere und das untere Druckstück, wobei der zweite elektrische Stromkreis geschlossen ist, wenn das das obere und das untere Druckstück das Werkstück bzw. eines der Werkstücke berühren sowie
- eine Auswerteschaltung zum Auswerten der elektrischen Signale des mindestens einen ersten elektrischen Stromkreises sowie des zweiten elektrischen Stromkreises, die eine Aktivierung der Energieversorgung für die Strahlquelle erst dann erlaubt, wenn die Auswertung der elektrischen Signale ergibt, dass sämtliche Stromkreise geschlossen sind
gelöst, siehe Anspruch 1.

Außerdem wird die Aufgabe durch ein Verfahren zur Materialbearbeitung mit den nachfolgenden Schritten gelöst:
- Positionieren des Oberwerkzeugs in Bezug zu dem Werkstück bzw. einem der Werkstücke,
- Positionieren des Unterwerkzeugs in Bezug zu dem Werkstück bzw. einem der Werkstücke,
- Auswerten der elektrischen Signale mindestens eines ersten elektrischen Stromkreises umfassend einen mechanisch betätigten Schalter, der derart an dem oberen Druckstück angeordnet ist, dass er schließt, wenn das obere Druckstück das Werkstück bzw. eines der Werkstücke berührt,
- Auswerten der elektrischen Signale eines zweiten elektrischen Stromkreises umfassend das obere und das untere Druckstück, wobei der zweite elektrische Stromkreis geschlossen ist, wenn das obere Druckstück das Werkstück bzw. eines der Werkstücke berührt und wenn das untere Druckstück das Werkstück bzw. eines der Werkstücke berührt und
- Aktivierung einer Energieversorgung für die Strahlquelle, wenn die Auswertung der elektrischen Signale ergibt, dass sämtliche Stromkreise geschlossen sind, siehe Anspruch 8.

Eine entscheidende Verbesserung der Personensicherheit wird dadurch erreicht, dass die Auswerteschaltung eine Aktivierung der Energieversorgung für die Strahlquelle erst dann erlaubt, wenn die Auswertung der elektrischen Signale ergibt, dass die mindestens zwei Stromkreise geschlossen sind. Selbst bei einem Defekt des mechanisch betätigten Schalters in dem ersten elektrischen Stromkreis, ist die Personensicherheit nach wie vor gewährleistet. Eine weitere erhebliche Steigerung der Personensicherheit wird erreicht in dem das obere und das untere Druckstück als elektrisch leitende Teile in den zweiten elektrischen Stromkreis eingebunden sind. Hierdurch wird bewirkt, dass der zweite elektrische Stromkreis erst dann geschlossen ist, wenn sowohl das obere als auch das untere Druckstück das Werkstück bzw. die beiden zu verschweißenden Werkstücke berühren. In dieser Materialbearbeitungsposition wird zwischen der Austrittsöffnung und dem Werkstück allenfalls ein minimaler Spalt freigegeben, so dass die zugängliche Strahlung einen vorgegebenen Grenzwert nicht überschreitet. Der Spalt beträgt maximal 1 mm und resultiert beispielsweise aus unterschiedlichen Krümmungen der Werkstückoberfläche und der von der Austrittsöffnung des oberen Druckstücks aufgespannten Fläche.

Wird das Ober- und Unterwerkzeug nicht richtig zu dem Werkstück bzw. den Werkstücken positioniert, kann es selbst bei einer Fehlauslösung des mechanisch betätigten Schalters in dem ersten elektrischen Stromkreis nicht zu einer Gefährdung von Personen durch eine versehentliche Aktivierung der Strahlquelle kommen.

Um einen Kurzschluss zwischen dem unteren und oberen Druckstück durch die übrigen, zumeist ebenfalls metallischen Bestandteile der Maschine zur Materialbearbeitung zu verhindern, ist es erforderlich, dass die beiden Druckstücke galvanisch voneinander getrennt sind. Eine elektrisch leitende Verbindung zwischen den beiden Druckstücken kommt durch die galvanische Trennung ausschließlich dann zu Stande, wenn das obere und das untere Druckstück das Werkstück aus elektrisch leitendem Material bzw. eines der Werkstücke berühren.

Eine weitere Erhöhung der Sicherheit lässt sich dadurch erzielen, wenn der mindestens eine erste elektrische Stromkreis zusätzlich zu dem mechanisch betätigten Schalter das Druckstück des Unterwerkzeugs umfasst, wobei der erste elektrische Stromkreis erst dann geschlossen ist, wenn sowohl der mechanisch betätigte Schalter geschlossen ist als auch das obere und das untere Druckstück das Werkstück bzw. eines der Werkstücke berühren. Das untere Druckstück ist bei dieser bevorzugten Ausgestaltung der Erfindung als elektrisch leitendes Teil in den ersten elektrischen Stromkreis eingebunden.

Konstruktiv vorteilhaft wird die Reihenschaltung aus unterem Druckstück, Werkstück(en) und einem der Kontakte des mechanisch betätigten Schalters derart ausgeführt, dass der mechanisch betätigte Schalter als Taster mit einem gegen die Kraft einer Feder in Richtung eines weiteren Kontaktes beweglichen Stiftkontakt ausgeführt ist, wobei ein Abschnitt des Stiftkontaktes über die Oberfläche des oberen Druckstücks hinausragt und der Abschnitt an dem Werkstück bzw. einem der Werkstücke zur Anlage bringbar ist.

Insbesondere bei einer nicht ebenen Oberfläche eines zu verschweißenden Werkstücks, kann es durch eine fehlerhafte Positionierung des Druckstücks des Oberwerkzeugs zu einem ungewollten Austritt von Laserstrahlung kommen, selbst dann, wenn das Ober- und das Unterwerkzeug das Werkstück bzw. die Werkstücke berühren. Umfasst die Maschine jedoch mindestens zwei erste elektrische Stromkreise, wobei die Betätigungen der Schalter in jedem ersten Stromkreis vorzugsweise unmittelbar neben der Austrittsöffnung für den Laserstrahl angeordnet sind, kann der Personenschutz auch beim Verschweißen nicht ebener Werkstücke verbessert werden. Die größtmögliche Sicherheit wird erreicht, wenn die Betätigungen der Schalter unmittelbar angrenzend zu den Schmalseiten einer schlitzförmigen Austrittsöffnung für den Laserstrahl angeordnet sind.

Um Beschädigungen des mechanisch betätigten Schalters beim Betrieb der Maschine durch Außeneinwirkung zu vermeiden, ist jeder Schalter vorzugsweise in eine Wand des oberen Druckstücks integriert. Sofern der mechanisch betätigte Schalter als Taster entsprechend den Merkmalen des Anspruchs 4 ausgeführt ist, erfolgt die Integration vorzugsweise derart, dass der Stiftkontakt in einer Führungshülse aus elektrisch isolierendem Material verschieblich geführt ist und der weitere Kontakt des Tasters gegenüber dem oberen Druckstück elektrisch isoliert ist.

Die den mindestens einen ersten und den zweiten Schaltkreis speisende Spannungsquelle erzeugt aus Gründen des Berührschutzes eine Niedervoltspannung, beispielsweise von 5 Volt. Zur potentialfreien Übertragung der elektrischen Signale zu der Auswerteschaltung wird in jeden Stromkreis ein Bauteil zur potentialfreien Signalübertragung in Reihe mit den übrigen stromführenden Bauteilen des jeweiligen Stromkreises geschaltet. Als Bauteil zur potentialfreien Signalübertragung kommt insbesondere ein Optokoppler in Betracht.

Für die einwandfreie Integration der Maschine zum Laserstrahlschweißen in eine Produktionsumgebung beispielsweise in der Automobilindustrie ist eine hohes Maß an Beweglichkeit für das vorzugsweise an einem Roboterarm angeordnete, maschinengeführte Schutzgehäuse mit dem Druckstück erforderlich. Um die für ein hohes Maß an Beweglichkeit erforderliche kompakte Ausführung von Ober- und Unterwerkzeug sicherzustellen, weist die Maschine ein Strahlführungssystem für die Laserstrahlung auf, das die Laserstrahlung von der ortsfesten Strahlquelle zu der Fokussieroptik in dem maschinengeführten Schutzgehäuse führt.

Die Strahlquelle ist vorzugsweise ein Faserlaser. Faserlaser verfügen über einen hohen elektrisch-optischen Wirkungsgrad, eine herausragende Strahlqualität, eine hohe Lebensdauer und einen kompakten, wartungsfreien und unempfindlichen Aufbau, weshalb sie für den vorgesehen Anwendungsfall besonders geeignet sind.

Der mindestens eine dotierte Kern einer Glasfaser bildet das aktive Medium. Faserlaser werden im Allgemeinen optisch gepumpt, in dem parallel zum Faserkern in dessen Mantel oder in diesen selbst Strahlung eingekoppelt wird. Die Pumpstrahlung stammt vorzugsweise von einer Pumpanordnung, die mehrere Singlemode-Faserlaser umfasst. Als Dotierungselement für jeden laseraktiven Faserkern kommen Ytterbium und Neodym für die geforderte Hochleistungsanwendung zum Einsatz.

Nach Austritt aus dem dotierten Kern gelangt der Laserstrahl in das Strahlführungssystem, insbesondere einen eine Glasfaser enthaltenden Lichtwellenleiter, welcher die Strahlung zu der maschinengeführten Fokussieroptik der Materialbearbeitungsmaschine leitet.

Nachfolgend wird die Erfindung anhand der Abbildungen näher erläutert. Es zeigen:
- **Figur 1**: eine schematische Darstellung einer Maschine zum Laserschweißen,

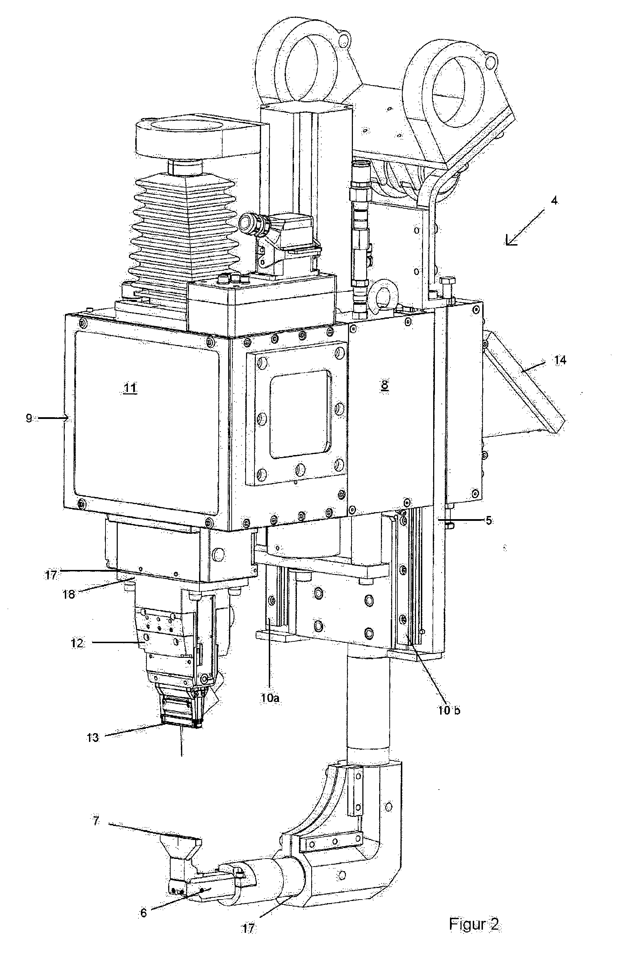

- **Figur 2**: eine perspektivische Darstellung eines Schweizwerkzeugs einer Maschine zum Laserschweißen sowie

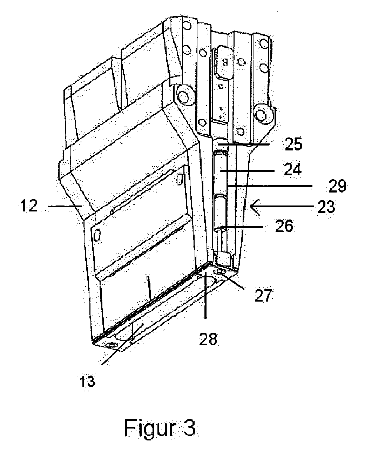

- **Figur 3**: ein Oberwerkzeug des Schweißwerkzeugs nach Figur 2.

Die Maschine (1) zum Verschweißen zweier Werkstücke (2, 3) umfasst ein Schweißwerkzeug (4), das als Laser-Schweißzange ausgeführt ist. An einem Zangengestell (5) ist ein C-förmiges Unterwerkzeug (6) angeordnet, an dessen freiem Ende sich ein unteres Druckstück (7) befindet. An dem Zangengestell (5) ist außerdem eine insgesamt mit (8) bezeichnet Verfahreinheit angeordnet, mit der ein Oberwerkzeug (9) entlang der Führungselemente (10a, 10b) in Richtung des Unterwerkzeugs (6) bzw. von diesem weg bewegbar ist.

Das Oberwerkzeug (9) umfasst ein Schutzgehäuse (11), das an der dem Unterwerkzeug (6) zugewandten Seite ein oberes Druckstück (12) mit einer Austrittsöffnung (13) aufweist, die den bei der Materialbearbeitung auf das Werkstück (2) gerichteten Laserstrahl umgibt. Die Austrittsöffnung (13) ist ein rechteckiger Schlitz.

Die in den Figuren nicht dargestellte Strahlquelle ist im Abstand zu dem Schweißwerkzeug (4) ortfest angeordnet. Die Strahlquelle ist ein Laser, insbesondere ein Faserlaser. Die Laserstrahlung wird über ein Strahlführungssystem, insbesondere einen flexiblen Lichtwellenleiter zu einer Fokussieroptik innerhalb des Schutzgehäuses (11) geführt. Durch die Anordnung und Ausrichtung der Fokussieroptik wird gewährleistet, dass die Laserstrahlung ausschließlich aus der schlitzförmigen Austrittsöffnung (13) des oberen Druckstücks (12) austritt. Das vorstehend beschriebene Oberwerkzeug (9) ist derart an der Verfahreinheit (8) angeordnet, dass das obere Druckstück (12) mit dem unteren Druckstück (7) des Unterwerkzeugs (6) fluchtet.

Das Zangengestell (5) ist mittels einer Flanschplatte (14) an einem Roboterarm eines nicht dargestellten Roboters verschraubt, der eine individuelle Bewegung und Positionierung des Schweißwerkzeugs (4) in Bezug zu den Werkstücken (2, 3) ermöglicht. Zunächst wird das Unterwerkzeug (6) mit dem unteren Druckstück (7) mit einer definierten Kraft gegen das Werkstück (3) gepresst. Durch Aktivieren der Verfahreinheit (8) wird der Abstand des Oberwerkzeugs (9) zu dem Unterwerkzeug (6) solange reduziert, bis der Austrittsschlitz (13) des Oberwerkzeugs (9) auf dem Werkstück (2) aufsetzt.

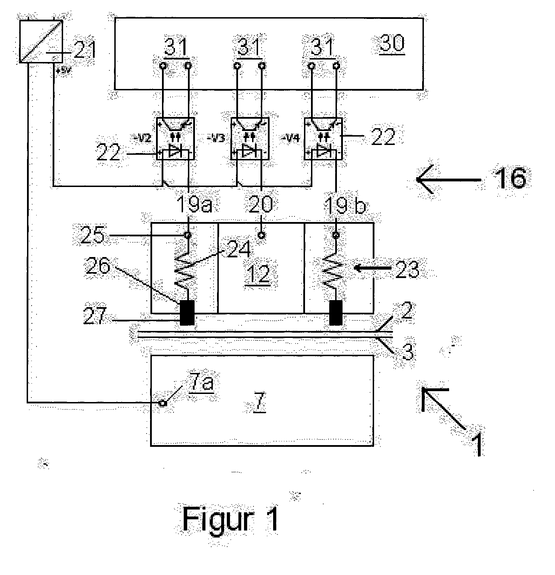

Um eine Aktivierung der Strahlquelle erst dann zu ermöglichen, wenn sowohl das obere Druckstück als auch das untere Druckstück an den Werkstücken (2, 3) anliegen, weist das Schweißwerkzeug (4) eine nachfolgend anhand von Figur 1 näher erläuterte Sicherheitseinrichtung (16) auf.

Eine galvanische Trennung zwischen dem oberen und dem unteren Druckstück (12, 6) verhindert einen Stromfluss zwischen den beiden Druckstücken über die übrigen metallischen Bestandteile des Schweißwerkzeugs (4). Als galvanische Trennung (17) ist beispielsweise eine Isolation zwischen dem Befestigungsflansch (18) des oberen Druckstücks (12) und dem Schutzgehäuse (11) sowie zusätzlich zwischen dem Unterwerkzeug (6) und dem Zangengestell (5) vorgesehen.

Die Sicherheitseinrichtung (16) umfasst darüber hinaus zwei erste elektrische Stromkreise (19a, 19b) und einen zweiten elektrischen Stromkreis (20). Die beiden ersten elektrischen Stromkreise (19a, 19b) werden jeweils durch die sämtlichen Stromkreisen gemeinsame Spannungsquelle (21) zur Erzeugung einer Niederspannung, einen mit dem Plus-Pol der Spannungsquelle (21) elektrisch leitend verbundenen Optokoppler (22), einen mit dem Optokoppler (22) elektrisch leitend verbundenen mechanisch betätigten Schalter (23) sowie das untere Druckstück (7) als Bauteile gebildet, wobei das untere Druckstück (7) über einen Kontakt (7a) mit der Masse der Spannungsquelle (21) elektrisch leitend verbunden ist.

Der mechanisch betätigte Schalter (23) ist als Taster mit einem gegen die Kraft einer Feder (24) in Richtung eines weiteren Kontaktes (25) beweglichen Stiftkontakt (26) ausgeführt. Der Stiftkontakt (26) ist in einer Führungshülse (29) aus elektrisch isolierendem Material verschieblich geführt. Auch der weitere Kontakt (25) ist gegenüber dem oberen Druckstück (12) elektrisch isoliert. Hierdurch ist es möglich, die beiden Kontakte (25, 26) Platz sparend und zugleich geschützt in einer Seitenwand des oberen Druckstücks (12) anzuordnen. Ein Abschnitt (27) des verschieblich geführten Stiftkontaktes (26) ragt vor dem Aufsetzen des oberen Druckstücks (12) auf dem Werkstück (2) geringfügig über eine Oberfläche (28) des die Austrittsöffnung (13) umgebenden Randes an der ebenen Unterseite des oberen Druckstücks (12) hinaus.

Der zweite elektrische Stromkreis (20) umfasst als Bauteile die Spannungsquelle (21), einen mit dem Plus-Pol der Spannungsquelle (21) elektrisch leitend verbundenen Optokoppler (22), das mit dem Optokoppler (22) elektrisch leitend verbundene obere Druckstück (12) sowie das untere Druckstück (7), wobei das untere Druckstück (7) über den Kontakt (7a) mit der Masse der Spannungsquelle (21) elektrisch leitend verbunden ist.

Schließlich umfasst die Sicherheitseinrichtung (16) eine Auswerteschaltung (30) mit drei Eingängen (31), die mit den Ausgängen, dh. den optischen Empfängern der drei Optokoppler (22) verbunden sind.

Die Maschine (1) zum Verschweißen mit der Sicherheitseinrichtung (16) arbeitet wie folgt:

Das Unterwerkzeug (6) wird mit Hilfe des Roboters positioniert, so dass das untere Druckstück (7) das Werkstück (3) berührt. Durch Aktivieren der Verfahreinheit (8) wird das Oberwerkzeug (9) in Richtung des Unterwerkzeugs (6) bewegt, so dass das obere Druckstück (12) das Werkstück (2) berührt. Hierdurch werden die beiden elektrisch leitfähigen Werkstücke (2, 3) durch das untere und obere Druckstück (12,7) zusammengepresst. Die Austrittsöffnung (13) des oberen Druckstücks (12) befindet sich nunmehr in einer Position relativ zu dem Werkstück (2), bei der die zugängliche Strahlung einen vorgegebenen Grenzwert nicht überschreitet.

In dieser Position des Schweißwerkzeugs (4) werden die beiden Abschnitte (27) des Stiftkontaktes (26) entgegen der Kraft der Feder in der Führungshülse (29) in Richtung des Kontaktes (25) verschoben und gelangen mit diesem in leitende Verbindung. Gleichzeitig steht der Stiftkontakt (26) mit dem Werkstück (2) in Verbindung, das über das Werkstück (3) und das untere Druckstück (7) die beiden ersten elektrischen Stromkreise (19a, 19b) schließt. Des Weiteren wird der zweite elektrische Stromkreis (20) geschlossen, wenn das obere und das untere Druckstück (12, 7) die Werkstücke (2, 3) berühren.

Die Auswerteschaltung (30) prüft durch Abfragen der drei Eingänge (31), ob sämtliche drei Stromkreise (19a, 19b, 20) geschlossen sind. Kommt es zu einer fehlerhaften Positionierung von Ober- und Unterwerkzeug (12,7), so dass das untere und/oder obere Druckstück das Werkstück (2 bzw. 3) nicht berührt, werden die Stromkreise nicht sämtlich geschlossen und ein Aktivierung der Energieversorgung für die Strahlquelle erfolgt nicht.

Durch die zusätzliche Überprüfung des zweiten elektrischen Stromkreises umfassend das obere und das untere Druckstück wird eine verbesserte Personensicherheit gewährleistet. Nochmals deutlich verbessert wird die Sicherheit durch die zusätzliche Einbindung des unteren Druckstücks des Unterwerkzeugs in die beiden ersten elektrischen Stromkreise.

**Bezugszeichenliste**

| **Nr.** | **Bezeichnung** |
|---|---|
| 1 | Maschine |
| 2 | Werkstück |
| 3 | Werkstück |
| 4 | Schweißwerkzeug |
| 5 | Zangengestell |
| 6 | Unterwerkzeug |
| 7 | unteres Druckstück |
| 7a | Kontakt |
| 8 | Verfahreinheit |
| 9 | Oberwerkzeug |
| 10 a, b | Führungselemente |
| 11 | Schutzgehäuse |
| 12 | oberes Druckstück |
| 13 | Austrittsöffnung |
| 14 | Flansch |
| 15 | -- |
| 16 | Sicherheitseinrichtung |
| 17 | galvanische Trennung |
| 18 | Flansch |
| 19 a, b | erster elektrischer Stromkreis |
| 20 | zweiter elektrischer Stromkreis |
| 21 | Spannungsquelle |
| 22 | Optokoppler |
| 23 | mechanisch betätigter Schalter |
| 24 | Feder |
| 25 | Kontakt |
| 26 | Stiftkontakt |
| 27 | Abschnitt |
| 28 | Oberfläche |
| 29 | Führungshülse |
| 30 | Auswerteschaltung |
| 31 | Eingänge |

## Patentansprüche

1. Maschine (1) zur Materialbearbeitung von einem elektrisch leitfähigen Werkstück oder mehreren sich berührenden, elektrisch leitfähigen Werkstücken (2,3) mit einem Oberwerkzeug (9) mit einem oberen Druckstück (12), wobei das obere Druckstück (12) eine Austrittsöffnung (13) für einen von einer Strahlquelle erzeugten Laserstrahl aufweist und einem relativ zum Oberwerkzeug (9) bewegbaren Unterwerkzeug (6) mit einem unteren Druckstück (7) sowie einer Energieversorgung für die Strahlquelle, **gekennzeichnet durch**,
- eine galvanische Trennung (17) zwischen den Druckstücken (6, 12) aus elektrisch leitendem Material,
- mindestens einen ersten elektrischen Stromkreis (19a) umfassend einen mechanisch betätigten Schalter (23), der derart an dem oberen Druckstück (12) angeordnet ist, dass er schließt, wenn das obere Druckstück (12) das Werkstück bzw. eines der Werkstücke (2) berührt,
- mindestens einen zweiten elektrischen Stromkreis (20) umfassend das obere und das untere Druckstück (12, 7), wobei der zweite elektrische Stromkreis (20) geschlossen ist, wenn das das obere und das untere Druckstück (12,7) das Werkstück bzw. eines der Werkstücke (2, 3) berühren,
- eine Auswerteschaltung (30) zum Auswerten der elektrischen Signale des mindestens einen ersten elektrischen Stromkreises (19a, 19b) sowie des zweiten elektrischen Stromkreises (20), die eine Aktivierung der Energieversorgung für die Strahlquelle erst dann erlaubt, wenn die Auswertung der elektrischen Signale ergibt, dass sämtliche Stromkreise (19a, 19b, 20) geschlossen sind.

2. Maschine nach Anspruch 1, **dadurch gekennzeichnet, dass** der mindestens eine erste elektrische Stromkreis (19a, 19b) zusätzlich das untere Druckstück (7) des Unterwerkzeugs (6) umfasst, wobei jeder erste elektrische Stromkreis (19a, 19b) geschlossen ist, wenn der Schalter (23) geschlossen ist und das obere und das untere Druckstück (12, 7) das Werkstück bzw. eines der Werkstücke (2,3) berühren.

3. Maschine nach Anspruch 1 oder 2, **dadurch gekennzeichnet, dass** die Maschine (1) mindestens zwei erste elektrische Stromkreise (19a, 19b) umfasst und die Betätigungen (27) der Schalter (23) neben einem die Austrittsöffnung (13) für den Laserstrahl begrenzenden Rand angeordnet sind.

4. Maschine nach einem der Ansprüche 1 bis 3, **dadurch gekennzeichnet, dass** der mechanisch betätigte Schalter (23) als Taster mit einem gegen die Kraft einer Feder in Richtung eines weiteren Kontaktes (25) beweglichen Stiftkontakt (26) ausgeführt ist, wobei ein Abschnitt (27) des Stiftkontaktes (26) über die Oberfläche des oberen Drucksstücks (12) hinausragt und der Abschnitt (27) an dem Werkstück bzw. einem der Werkstücke (2,3) zur Anlage bringbar ist.

5. Maschine nach Anspruch 4, **dadurch gekennzeichnet, dass** der Stiftkontakt (26) in einer Führungshülse (29) aus elektrisch isolierendem Material verschieblich geführt ist, der weitere Kontakt (25) gegenüber dem oberen Druckstück (12) elektrisch isoliert ist und die Führungshülse (29) und der weitere Kontakt (25) in einer Wand des oberen Druckstücks (12) angeordnet sind.

6. Maschine nach einem der Ansprüche 1 bis 5, **dadurch gekennzeichnet, dass** jeder Schaltkreis (19a, 19b, 20) ein Bauelement (22) zur potentialfreien Signalübertragung zu der Auswerteschaltung (30) aufweist.

7. Maschine nach einem der Ansprüche 1 bis 6, **dadurch gekennzeichnet, dass** die Maschine (1) ein Strahlführungssystem für die Laserstrahlung aufweist , das Oberwerkzeug (9) ein Schutzgehäuse (11) umfasst, an dem das obere Druckstück (12) angeordnet ist und das Strahlführungssystem die Laserstrahlung von der Strahlquelle zu einer Fokussieroptik in dem Schutzgehäuse (11) führt.

8. Verfahren zur Materialbearbeitung von einem elektrisch leitfähigen Werkstück oder mehreren sich berührenden, elektrisch leitfähigen Werkstücken (2, 3) mit einem Oberwerkzeug (9) mit einem oberen Druckstück (12), wobei das obere Druckstück (12) eine Austrittsöffnung (13) für einen von einer Strahlquelle erzeugten Laserstrahl aufweist und einem relativ zum Oberwerkzeug (9) bewegbaren Unterwerkzeug (6) mit einem unteren Druckstück (7), wobei die galvanisch voneinander getrennten Druckstücke (12, 7) aus elektrisch leitendem Material bestehen, **gekennzeichnet durch**,
- Positionieren des Oberwerkzeugs (9) in Bezug zu dem Werkstück bzw. einem der Werkstücke (2, 3),
- Positionieren des Unterwerkzeugs (9) in Bezug zu dem Werkstück bzw. einem der Werkstücke (2, 3),
- Auswerten der elektrischen Signale mindestens eines ersten elektrischen Stromkreises (19a, 19b) umfassend einen mechanisch betätigten Schalter (23), der derart an dem oberen Druckstück (12) angeordnet ist, dass er schließt, wenn das obere Druckstück (12) das Werkstück bzw. eines der Werkstücke (2, 3) berührt,
- Auswerten der elektrischen Signale eines zweiten elektrischen Stromkreises (20) umfassend das obere und das untere Druckstück (12, 7), wobei der zweite elektrische Stromkreis (20) geschlossen ist, wenn das obere Druckstück (12) das Werkstück bzw. eines der Werkstücke (2, 3) berührt und wenn das untere Druckstück (7) das Werkstück bzw. eines der Werkstücke (2, 3) berührt,
- Aktivierung einer Energieversorgung für die Strahlquelle, wenn die Auswertung der elektrischen Signale ergibt, dass sämtliche Stromkreise (19a, 19b, 20) geschlossen sind.

9. Verfahren nach Anspruch 8, **gekennzeichnet durch** das Auswerten der elektrischen Signale des mindestens einen ersten elektrischen Stromkreises (19a, 19b) zusätzlich umfassend das untere Druckstück (7) des Unterwerkzeugs (6), wobei der erste elektrische Stromkreis (19a, 19b) geschlossen ist, wenn dass das obere Druckstück (12) das Werkstück bzw. eines der Werkstücke (2, 3) berührt und wenn das untere Druckstück (7) das Werkstück bzw. eines der Werkstücke (2, 3) berührt.

10. Verfahren nach Anspruch 8 oder 9, **gekennzeichnet durch** die Übertragung der elektrischen Signale von jedem Stromkreis (19a, 19b, 20) an eine Auswerteschaltung (30) zum Auswerten der elektrischen Signale jeweils mit einem Bauelement (22) zur potentialfreien Signalübertragung erfolgt.

## Claims

1. Machine (1) for the material processing of an electrically conductive workpiece or a plurality of contiguous electrically conductive workpieces (2, 3) comprising an upper tool (9) having an upper pressure piece (12), wherein the upper pressure piece (12) has an exit opening (13) for a laser beam generated by a beam source and lower tool (6) which is movable relative to the upper tool (9) comprising a lower pressure piece (7) and a power supply for the beam source,
**characterised by**
- a galvanic separation (17) between the pressure pieces (6, 12) made of electrically conductive material,
- at least one first electrical circuit (19a) comprising a mechanically actuated switch (23) which is disposed on the upper pressure piece (12) in such a manner that it closes when the upper pressure piece (12) contacts the workpiece or one of the workpieces (2),
- at least one second electrical circuit (20) comprising the upper and the lower pressure piece (12, 7), where the second electrical circuit (20) is closed when the upper and the lower pressure piece (12, 7) contact the workpiece or one of the workpieces (2, 3) and
- an evaluation circuit (30) for evaluating the electrical signals of the at least one first electrical circuit (19a, 19b) and the second electrical circuit (20), which only allows an activation of the power supply for the beam source when the evaluation of the electrical signals reveals that all the circuits (19a, 19b, 20) are closed.

2. The machine according to claim 1, **characterised in that** the at least one first electrical circuit (19a, 19b) additionally comprises the lower pressure piece (7) of the lower tool (6), wherein each first electrical circuit (19a, 19b) is closed when the switch (23) is closed and the upper and the lower pressure piece (12, 7) contact the workpiece or one of the workpieces (2, 3).

3. The machine according to claim 1 or 2, **characterised in that** the machine (1) comprises at least two first electrical circuits (19a, 19b) and the actuators (27) of the switches (23) are disposed adjacent to an edge delimiting the outlet opening (13) for the laser beam.

4. The machine according to any one of claims 1 to 3, **characterised in that** the mechanically actuated switch (23) is designed as a pushbutton with a pin contact (26) which is movable against the force of a spring in the direction of a further contact (25), wherein a portion (27) of the pin contact (26) projects over the surface of the upper pressure piece (12) and the portion (27) can be brought to abut against the workpiece or one of the workpieces (2, 3).

5. The machine according to claim 4, **characterised in that** the pin contact (26) is guided displaceably in a guide sleeve (29) made of electrically insulating material, the further contact (25) is electrically insulated with respect to the upper pressure piece (12) and the guide sleeve (29) and the further contact (25) are disposed in a wall of the upper pressure piece (12).

6. The machine according to any one of claims 1 to 5, **characterised in that** each circuit (19a, 19b, 20) comprises a component (22) for potential-free signal transmission to the evaluation circuit (30).

7. The machine according to any one of claims 1 to 6, **characterised in that** the machine (1) has a beam guidance system for the laser radiation, the upper tool (9) comprises a protective housing (11) on which the upper pressure piece (12) is located and the beam guidance system guides the laser radiation from the beam source to focusing optics in the protective housing (11).

8. Method for the material processing of an electrically conductive workpiece or a plurality of contiguous electrically conductive workpieces (2, 3) comprising an upper tool (9) having an upper pressure piece (12), wherein the upper pressure piece (12) has an exit opening (13) for a laser beam generated by a beam source and lower tool (6) which is movable relative to the upper tool (9) comprising a lower pressure piece (7), wherein the galvanically separated pressure pieces (12, 7) consist of an electrically conductive material, **characterised by**
- positioning the upper tool (9) in relation to the workpiece or one of the workpieces (2, 3),
- positioning the lower tool (9) in relation to the workpiece or one of the workpieces (2, 3),
- evaluating the electrical signals of at least one first electrical circuit (19a, 19b) comprising a mechanically actuated switch (23) which is disposed on the upper pressure piece (12) in such a manner that it closes when the upper pressure piece (12) contacts the workpiece or one of the workpieces (2, 3),
- evaluating the electrical signals of a second electrical circuit (20) comprising the upper and the lower pressure piece (12, 7), where the second electrical circuit (20) is closed when the upper pressure piece (12) contacts the workpiece or one of the workpieces (2, 3) and when the lower pressure piece (7) contacts the workpiece or one of the workpieces (2, 3) and
- activating a power supply for the beam source when the evaluation of the electrical signals reveals that all the circuits (19a, 19b, 20) are closed.

9. The method according to claim 8, **characterised by** the evaluation of the electrical signals of the at least one first electrical circuit (19a, 19b) additionally comprising the lower pressure piece (7) of the lower tool (6), wherein the first electrical circuit (19a, 19b) is closed when the upper pressure piece (12) contacts the workpiece or one of the workpiece (2, 3) and when the lower pressure piece (7) contacts the workpiece or one of the workpieces (2, 3).

10. The method according to claim 8 or 9, **characterised by** the transmission of the electrical signals from each circuit (19a, 19b, 20) to an evaluation circuit (30) for evaluating the electrical signals is accomplished in each case by means of a component (22) for potential-free signal transmission.

## Revendications

1. Machine (1) destinée à usiner la matière d'une pièce d'oeuvre conductrice d'électricité ou de plusieurs pièces d'oeuvre (2, 3) conductrices d'électricité qui se touchent, avec un outil supérieur (9), avec une pièce de pression (12) supérieure, la pièce de pression (12) supérieure comportant un orifice de sortie (13) pour un rayon laser crée par une source de rayonnement et avec un outil inférieur (6) mobile par rapport à l'outil supérieur (9), avec une pièce de pression (7) inférieure, ainsi qu'avec une alimentation en énergie pour la source de rayonnement,
**caractérisée par**
- une séparation galvanique (17) entre les pièces de pression (6, 12) en matière conductrice d'électricité,
- au moins un premier circuit (19a) de courant électrique comprenant un interrupteur (23) à manoeuvre mécanique qui est placé sur la pièce de pression (12) supérieure de telle sorte qu'il ferme lorsque la pièce de pression (12) supérieure touche la pièce d'oeuvre ou l'une des pièces d'oeuvre (2),
- au moins un deuxième circuit (20) de courant électrique comprenant la pièce de pression (12, 7) supérieure et inférieure, le deuxième circuit (20) de courant électrique étant fermé lorsque la pièce de pression (12, 7) inférieure et supérieure touchent la pièce d'oeuvre ou l'une des pièces d'oeuvre (2, 3),
- un circuit d'évaluation (30) pour évaluer les signaux électriques de l'au moins un premier circuit (19a, 19b) de courant électrique, ainsi que du deuxième circuit (20) de courant électrique, qui ne permet une activation de l'alimentation en énergie pour la source de rayonnement que lorsqu'il résulte de l'évaluation des signaux électriques que tous les circuits (19a, 19b, 20) de courant électriques sont fermés.

2. Machine selon la revendication 1, **caractérisée en ce que** l'au moins un circuit (19a, 19b) de courant électrique comprend en supplément la pièce de pression (7) inférieure de l'outil (6) inférieur, chaque premier circuit (19a, 19b) de courant électrique étant fermé lorsque l'interrupteur (23) est fermé et la pièce de pression (12, 7) inférieure et supérieure touchent la pièce d'oeuvre ou l'une des pièces d'oeuvre (2, 3).

3. Machine selon la revendication 1 ou la revendication 2, **caractérisée en ce que** la machine (1) comprend au moins deux circuits (19a, 19b) de courant électrique et les manoeuvres (27) des interrupteurs (23) sont placées à côté d'un bord délimitant l'orifice de sortie (13) pour le rayon laser.

4. Machine selon l'une quelconque des revendications 1 à 3, **caractérisée en ce que** l'interrupteur (23) à manoeuvre mécanique est réalisé en tant que touche avec un contact mâle (26) mobile contre la force d'un ressort en direction d'un contact (25) supplémentaire, une partie (27) du contact mâle (26) saillant pardessus la surface de la pièce de pression (12) supérieure et la partie (27) pouvant être amenée en appui sur la pièce d'oeuvre ou sur l'une des pièces d'oeuvre (2, 3).

5. Machine selon la revendication 4, **caractérisée en ce que** le contact mâle (26) est guidé en étant déplaçable dans une douille de guidage (29) en matière électriquement isolante, le contact (25) supplémentaire est isolé par rapport à la pièce de pression (12) supérieure et la douille de guidage (29) et le contact (25) supplémentaire sont placés dans une paroi de la pièce de pression (12) supérieure.

6. Machine selon l'une quelconque des revendications 1 à 5, **caractérisée en ce que** chaque circuit électrique (19a, 19b, 20) comporte un élément de construction (22) pour la transmission sans potentiel du signal vers le circuit d'évaluation (30).

7. Machine selon l'une quelconque des revendications 1 à 6, **caractérisée en ce que** la machine (1) comporte un système de guidage de rayon pour le rayonnement laser, l'outil supérieur (9) comprend un carter protecteur (11) sur lequel est placée la pièce de pression (12) supérieure et le système de guidage de rayon guide le rayonnement laser de la source de rayonnement vers une optique de focalisation dans le carter protecteur (11).

8. Procédé d'usinage de la matière d'une pièce d'oeuvre conductrice d'électricité ou de plusieurs pièces d'oeuvre (2, 3) conductrices d'électricité qui se touchent, avec un outil supérieur (9), avec une pièce de pression (12) supérieure, la pièce de pression (12) supérieure comportant un orifice de sortie (13) pour un rayon laser crée par une source de rayonnement et un outil inférieur (6) mobile par rapport à l'outil supérieur (9), avec une pièce de pression (7) inférieure, les pièces de pression (12, 7) galvaniquement séparées l'une de l'autre étant constituées d'une matière conductrice d'électricité, **caractérisé par**
- le positionnement de l'outil supérieur (9) par rapport à la pièce d'oeuvre ou l'une des pièces d'oeuvre (2, 3),
- le positionnement de l'outil inférieur (9) par rapport à la pièce d'oeuvre ou à l'une des pièces d'oeuvre (2, 3),
- l'évaluation des signaux électriques au moins d'un premier circuit (19a, 19b) de courant électrique, comprenant un interrupteur (23) à manoeuvre mécanique qui est placé sur la pièce de pression (12) supérieure de telle sorte qu'il ferme lorsque la pièce de pression (12) supérieure touche la pièce d'oeuvre ou l'une des pièces d'oeuvre (2, 3),
- l'évaluation des signaux électriques d'un deuxième circuit (20) de courant électrique comprenant la pièce de pression (12, 7) inférieure et supérieure, le deuxième circuit (20) de courant électrique étant fermé lorsque la pièce de pression (12) supérieure touche la pièce d'oeuvre ou l'une des pièces d'oeuvre (2, 3) et lorsque la pièce de pression (7) inférieure touche la pièce d'oeuvre ou l'une des pièces d'oeuvres (2, 3),
- l'activation d'une alimentation en énergie pour la surface de rayonnement, lorsqu'il résulte de l'évaluation des signaux électriques que tous les circuits (19a, 19b, 20) de courant électriques sont fermés.

9. Procédé selon la revendication 8, **caractérisé par** l'évaluation des signaux électriques de l'au moins un premier circuit (19a, 19b) de courant électrique, comprenant en supplément la pièce de pression (7) inférieure de l'outil inférieur (6), le premier circuit (19a, 19b) de courant électrique étant fermé lorsque la pièce de pression (12) supérieure touche la pièce d'oeuvre ou l'une des pièces d'oeuvre (2, 3) et lorsque la pièce de pression (7) inférieure touche la pièce d'oeuvre ou l'une des pièces d'oeuvre (2, 3).

10. Procédé selon la revendication 8 ou la revendication 9, **caractérisé en ce que** la transmission des signaux électriques de chaque circuit (19a, 19b, 20) à un circuit d'évaluation (30) pour évaluer les signaux électriques s'effectue chaque fois avec un composant (22) pour la transmission sans potentiel de signaux.
